# EUROPÄISCHE PATENTSCHRIFT

(11) **EP 2 531 874 B1**
(45) Veröffentlichungstag und Bekanntmachung des Hinweises auf die Patenterteilung: **14.10.2020**
(21) Anmeldenummer: 11701074.4
(22) Anmeldetag: 19.01.2011
(51) Int. Cl.: B23K 26/046, G02B 3/14, G02B 26/08

(54) **ADAPTIVE LINSE**
ADAPTIVE LENS
LENTILLE ADAPTATIVE

(30) Priorität: 03.02.2010 DE 102010001551
(43) Veröffentlichungstag der Anmeldung: 12.12.2012
(73) Patentinhaber: Trumpf Laser- und Systemtechnik GmbH, 71254 Ditzingen (DE)
(72) Erfinder: ANDREASCH, Wolfgang, 71384 Weinstadt (DE); BURGER, Dieter, 71665 Vaihingen (DE); ENZMANN, Andreas, 78052 Villingen-Schwenningen (DE); SEPP, Florian, 86972 Altenstadt (DE)
(74) Vertreter: Kohler Schmid Möbus Patentanwälte
(86) Internationale Anmeldenummer: PCT/EP2011/050672
(87) Internationale Veröffentlichungsnummer: WO 2011/095395

(56) Entgegenhaltungen:
- EP-A1- 1 837 696
- WO-A1-2007/017089
- GB-A- 2 422 206
- JP-A- 9 049 904
- JP-A- 2007 222 902
- US-A1- 2008 225 379
- US-A1- 2008 316 610
- US-A1- 2009 052 049

## Beschreibung

Die vorliegende Erfindung betrifft eine adaptive Linse für die Lasermaterialbearbeitung, insbesondere im Hochleistungsbereich von mindestens ca. 1 kW, gemäß dem Oberbegriff von Anspruch 1.

Eine derartige adaptive Linse ist beispielsweise durch die US 2008/225379 A1 bekannt geworden.

Es sind bereits adaptive Optiken in Form von adaptiven Spiegeln für CO₂- oder Nd:YAG-Laser bekannt, mit denen sich in Echtzeit Korrekturen von Fokuslage und Strahldurchmesser eines Laserstrahls durchführen lassen, um z.B. eine kontrollierte Laserbearbeitung auf Werkstücken zu ermöglichen. Der adaptive Spiegel weist eine deformierbare Spiegelplatte auf, die z.B. von einem Piezo-Aktuator schnell und gezielt verformt wird, so dass sich die Brennweite des adaptiven Spiegels stufenlos regeln lässt. Die Spiegelplatten sind mit einer hochreflektiven Beschichtung für CO₂-Laser (10,6 µm) oder für Nd:YAG-Laser (1,06 µm) erhältlich.

Bei der aus US 2008/0225379 A1 bekannten adaptiven Linse sind beide Ringaktuatoren jeweils an der der Kammer abgewandten Außenseite der Linsenflächen angeordnet. Die Linsenflächen sind durch zwei Membrane gebildet, die durch die beiden ringförmigen Elektroden jeweils radial zusammen- oder auseinandergezogen werden und randseitig fest eingespannt sind. Um eine Verformung der adaptiven Linse zu erreichen, werden einer oder beide Aktuatoren betätigt. Um wahlweise eine konkave oder eine konvexe Krümmung beider Linsenflächen zu erreichen, müssen stets beide Aktuatoren "gegeneinander" eingesetzt werden.

US 2008/0316610 A1 offenbart eine adaptive Linse mit einer fluidgefüllten Kammer, mit zwei nicht verformbaren Endplatten und mit einer in der Kammer angeordneten Linsenfläche in Form einer Meniskusmembran, die mittels eines piezoelektrischen Ringaktuators vor- und zurückbewegbar ist, um durch den dabei auftretenden Druckunterschied die Wölbung der Linsenfläche zu verändern.

Schließlich ist aus US 2009/0052049 A1 eine adaptive Linse bekannt, bei der durch einen ringförmigen Kolben eine Volumenänderung in der Kammer bewirkt wird, wobei der dadurch entstehende Unter- oder Überdruck zu einer Änderung der Linsenkrümmung führt. Die Kammer ist durch eine hantelförmige Membran gebildet, und der ringförmige Kolben wirkt auf die beiden dickeren Außenbereiche der hantelförmigen Membran.

Demgegenüber ist es die Aufgabe der vorliegenden Erfindung, bei einer adaptiven Linse der eingangs genannten Art eine alternative Einrichtung zum elastischen Verformen der beiden Linsenflächen anzugeben.

Diese Aufgabe wird erfindungsgemäß durch eine adaptive Linse mit den Merkmalen von Anspruch 1 gelöst.

Das zwischen den beiden Linsenflächen eingeschlossene Kammervolumen wird durch ein für die Laserstrahlung (optisch) transparentes Fluid ausgefüllt. Durch Bewegen zumindest einer der beiden Linsenflächen relativ zur anderen Linsenfläche ändert sich lokal an den bewegten Bereichen der Abstand und somit das dem Fluid zur Verfügung stehende Volumen. Hierdurch erhöht sich im Falle einer Verringerung des lokalen Abstands der beiden Linsenflächen der Druck des Fluids auf die Linsenflächen, wodurch diese sich elastisch verformen. Im beschriebenen Fall der Druckerhöhung bilden die Linsenflächen eine konvexe Kontur aus, wodurch der durch die adaptive Linse hindurchtretende Laserstrahl eine Veränderung seiner Fokuslage erfährt. Sind die beiden Linsenflächen randseitig symmetrisch zur optischen Achse eingespannt, so wird die Druckänderung im Fluid symmetrisch zur optischen Achse auf die Linsenflächen eingebracht. Durch die zwei Ringaktuatoren kann in der Kammer wahlweise ein Über- oder Unterdruck und somit wahlweise eine konvexe oder konkave Wölbung der beiden Linsenflächen bewirkt werden.

Zur Kompensation von thermisch bedingten Wärmeausdehnungen ist die Kammer mit dem Fluid an ein Druckausgleichselement (z.B. einen Druckausgleichsbehälter) angeschlossen, so dass niederfrequente Volumen- und Druckänderungen ausgeglichen werden und die Fokuslage stabil bleibt. Neben dem eigentlichen Druckausgleich, der passiv erfolgt, kann über den Druckausgleichsbehälter mittels Ansteuerung auch eine aktive Drucksteuerung vorgenommen werden. Diese kann dazu genutzt werden, die Formung der Linsenflächen niederfrequent bzw. statisch vorzugeben. Werden keine hochfrequenten Fokusoszillationen angestrebt, kann die Fokuslage hierüber eingestellt werden.

Hochfrequente, durch oszillierende Bewegungen der Einrichtung zur Änderung des Abstands der beiden Linsenflächen hervorgerufene Volumenänderungen führen zu einer hochfrequenten Fokusoszillation. Desweiteren kann durch einen mittleren Fluiddruck eine mittlere Fokuslage des Laserstrahls am Werkstück eingestellt werden, um die herum bei Bedarf die Fokuslage oszilliert.

In einer bevorzugten Ausführungsform sind die Linsenflächen als planparallele Platten ausgebildet, die bei einem in der Kammer herrschenden Über- oder Unterdruck elastisch verformt werden und ohne Druckbeaufschlagung - quasi in ihrer "Ruhelage" - keinen (oder nur geringen) Einfluss auf die Strahlführung und Formung des Laserstrahls nehmen. In einer alternativen Ausführungsform sind die Linsenflächen durch eine entsprechende Konturgebung von vorneherein, also bereits im nicht-druckbeaufschlagten Zustand, an der Strahlformung beteiligt.

Erfindungsgemäß sind die Linsenflächen aus Glas gebildet.

Die erfindungsgemäße adaptive Linse eignet sich insbesondere für die Grundwellenlängen von Festkörperlasern, also Wellenlängen im Bereich von ca. 1 µm. Darüber hinaus eignet sich die adaptive Linse auch für Harmonische dieser Grundwellenlängen (Frequenzkonversion).

In einer weiteren bevorzugten Ausführungsform weisen die Linsenflächen jeweils auf ihrer der Kammer abgewandten (Außen-)Seite und/oder auf ihrer der Kammer zugewandten (Innen-)Seite eine insbesondere unterschiedliche Beschichtung auf, die die Transmission am Übergang der jeweiligen Medien zueinander maximiert. Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen Längsschnitt durch die erfindungsgemäße adaptive Linse; und
- Fig. 2: eine Draufsicht auf einen piezoelektrischen Ringaktuator von Fig. 1.

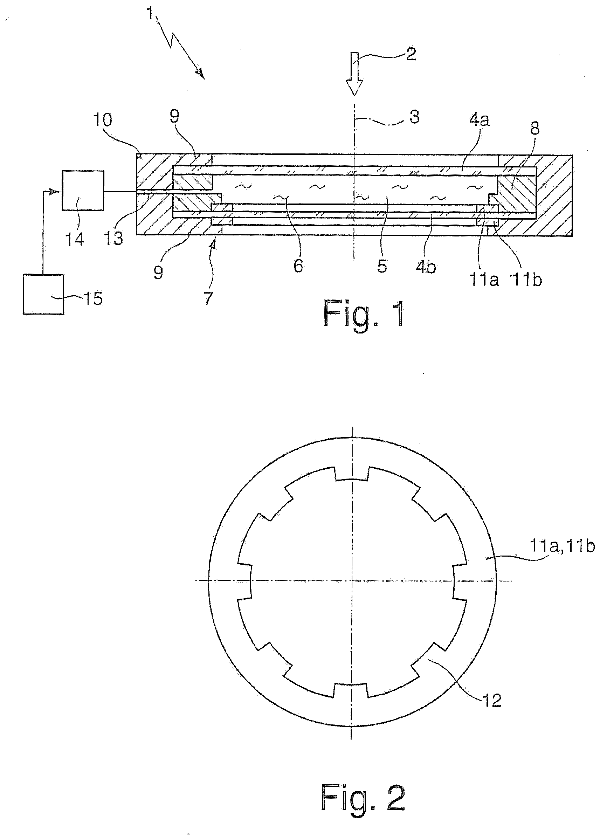

Die in **Fig. 1** gezeigte adaptive Linse 1 dient zur Anpassung und Variation der Fokuslage eines Laserstrahls **2,** und zwar insbesondere bei der Lasermaterialbearbeitung im Hochleistungsbereich von mindestens ca. 1 kW.

Die adaptive Linse 1 umfasst zwei voneinander in Richtung der optischen Achse **3** beabstandete, verformbare Linsenflächen **4a, 4b,** eine zwischen den beiden Linsenflächen 4a, 4b ausgebildete Kammer **5,** die mit einem für die Laserstrahlung transparenten Fluid **6** (z.B. auf Silikonölbasis) gefüllt ist, sowie eine Einrichtung **7** zur Änderung des Abstands der beiden Linsenflächen 4a, 4b zueinander entlang der optischen Achse 3. Die beiden Linsenflächen 4a, 4b sind aus einem für die Laserstrahlung transparenten Material, insbesondere aus Glas, mit einer der Laserleistung angepassten Zerstörschwelle und können beispielsweise planparallele Platten sein.

Die beiden Linsenflächen 4a, 4b und ein dazwischen angeordneter Zwischenring **8** sind randseitig zwischen zwei Ringabsätzen **9** eines Gehäuses (Ringfassung) **10** axial eingespannt und dabei über nicht gezeigte Dichtungen gegeneinander abgedichtet. Die Kammer 5 ist also durch die beiden Linsenflächen 4 und den Zwischenring 8 definiert.

Die Einrichtung 7 zur Abstandsänderung der beiden Linsenflächen 4a, 4b weist zwei in axialer Richtung wirkende piezoelektrische Ringaktuatoren **11a, 11b** auf, die an beiden Seiten der in Fig. 1 unteren Linsenfläche 4b vorgesehen sind und deren axiale Länge sich im Falle ihrer Ansteuerung jeweils vergrößert. Der in Fig. 1 obere Ringaktuator 11a ist innerhalb der Kammer 5 an der der Kammer 5 zugewandten Innenseite der unteren Linsenfläche 4b angeordnet und an einem Ringabsatz des Zwischenrings 8 abgestützt, während der untere Ringaktuator 11b an der der Kammer 5 abgewandten Außenseite der unteren Linsenfläche 4b angeordnet und an einem Ringabsatz des Gehäuses 10 abgestützt ist.

Durch Ansteuerung des oberen Ringaktuators 11a kann die untere Linsenfläche 4b randseitig relativ zur oberen Linsenfläche 4a axial nach außen (in Fig. 1 nach unten) bewegt bzw. ausgelenkt werden, und durch Ansteuerung des unteren Ringaktuators 11b kann die untere Linsenfläche 4b relativ zur oberen Linsenfläche 4a axial nach innen (in Fig. 1 nach oben) bewegt bzw. ausgelenkt werden. Durch diese lokale Bewegung bzw. Auslenkung der unteren Linsenfläche 4b ändert sich in diesem Bereich jeweils der lokale Abstand zur oberen Linsenfläche 4a und somit das dem Fluid 6 zur Verfügung stehende Volumen. Hierdurch erhöht sich im Falle einer Verringerung des lokalen Abstands der beiden Linsenflächen 4a, 4b der Druck des Fluids auf die Linsenflächen 4a, 4b, wodurch diese sich elastisch nach außen verformen und jeweils eine konvexe Linsenkontur ausbilden. Im Falle einer Vergrößerung des lokalen Abstands der beiden Linsenflächen 4a, 4b verringert sich der Druck des Fluids auf die Linsenflächen 4a, 4b, wodurch diese sich elastisch nach innen verformen und jeweils eine konkave Linsenkontur ausbilden. In beiden Fällen erfährt der durch die adaptive Linse 1 hindurchtretende Laserstrahl 7 eine Veränderung seiner Fokuslage. Da die beiden Linsenflächen 4a, 4b und die Ringaktuatoren 11a, 11b symmetrisch zur optischen Achse 3 eingespannt sind, bewirkt eine Druckänderung im Fluid eine zur optischen Achse 3 symmetrische Verformung der beiden Linsenflächen 4a, 4b. Eine Verringerung des Drucks resultiert nicht zwingend in einer konkaven Verformung, da bspw. auch nur eine zuvor erfolgte konvexe Wölbung reduziert wird. Erst mit Erreichen eines Unterdrucks stellt sich eine konkave Verformung ein bzw. wenn die Spannungsverhältnisse dies ergeben.

Wie in **Fig. 2** gezeigt, weisen die Ringaktuatoren 11a, 11b jeweils radial nach innen vorspringende Vorsprünge **12** auf, mit denen die untere Linsenfläche 4b jeweils axial ausgelenkt wird.

Zur Kompensation von thermisch bedingten Wärmeausdehnungen ist die Kammer 5 mit dem Fluid 6 über eine Zuleitung **13** an ein Druckausgleichselement **14,** wie es dem Fachmann aus einer Vielzahl von Anwendungen bekannt ist, angeschlossen. Das Druckausgleichselement 14 kann beispielsweise ein Druckausgleichsbehälter sein, der zwei durch eine Membran getrennte Kammern aufweist, von denen die eine mit einem Gas gefüllt ist und die andere eine Flüssigkeit enthält. Die flüssigkeitsgefüllte Kammer ist über die Zuleitung 13 an die durch die Linsenflächen 4a, 4b und den Zwischenring 8 gebildete Kammer 5 angeschlossen, so dass aufgrund der im Druckausgleichsbehälter für Druckaufbau und -abbau längeren Reaktionszeit niederfrequente Volumen- und Druckänderungen ausgeglichen werden und die Fokuslage stabil bleibt.

Zudem wird das Druckausgleichselement 14 über eine Steuerung **15** angesteuert, so dass der Druck in der Kammer 5 und somit die Wölbung der Linsenflächen 4a, 4b hierüber aktiv eingestellt werden können. Hierdurch können eine Ruhelage definiert bzw. von dieser ausgehend weitere Fokuslagenänderungen vorgenommen werden, die als Ausgangs- oder Mittellagen verstanden werden können. Diese können dann über entsprechende Aktuatoren mit hochfrequenten Fokuslagenoszillationen überlagert werden.

Zusätzlich oder alternativ können ein oder zwei Ringaktuatoren auch an der oberen Linsenfläche 4a angeordnet sein.

Weiterhin können die beiden Linsenflächen 4a, 4b auf ihrer der Kammer 5 abgewandten Außenseite und/oder auf ihrer der Kammer 5 zugewandten Innenseite eine unterschiedliche Beschichtung aufweisen, die die Transmission am Übergang der jeweiligen Medien, wie Luft zu Glas, Glas zu Fluid, Fluid zu Glas und Glas zu Luft, zueinander maximiert.

## Patentansprüche

1. Adaptive Linse (1) für die Lasermaterialbearbeitung, insbesondere im Hochleistungsbereich von mindestens ca. 1 kW, umfassend:
zwei voneinander in Richtung der optischen Achse (3) beabstandete,
verformbare Linsenflächen (4a, 4b),
eine zwischen den beiden Linsenflächen (4a, 4b) ausgebildete Kammer (5),
die mit einem Fluid (6) gefüllt ist, und
eine Einrichtung (7) mit mindestens zwei piezoelektrischen Ringaktuatoren (11a, 11b) zum elastischen Verformen der beiden Linsenflächen (4a, 4b) entweder jeweils axial nach innen oder jeweils axial nach außen, wobei der eine piezoelektrische Ringaktuator (11b) an einer der Kammer (5) abgewandten Außenseite einer der beiden Linsenflächen (4a, 4b) angeordnet ist,
**dadurch gekennzeichnet,**
**dass** die Linsenflächen durch zwei Glasplatten (4a, 4b) gebildet sind, und dass der andere piezoelektrische Ringaktuator (11a) an einer der Kammer (5) zugewandten Innenseite einer der beiden Glasplatten (4a, 4b) angeordnet ist.

2. Adaptive Linse nach Anspruch 1, **dadurch gekennzeichnet, dass** die Kammer (5) mit dem Fluid (6) an ein Druckausgleichselement (14) angeschlossen ist.

3. Adaptive Linse nach Anspruch 2, **dadurch gekennzeichnet, dass** das Druckausgleichselement (14) zum Druckausgleich von niederfrequenten Druckänderungen ausgebildet ist.

4. Adaptive Linse nach einem der vorhergehenden Ansprüche, **dadurch gekennzeichnet, dass** die Glasplatten (4a, 4b) jeweils durch plane oder gekrümmte Glasplatten gebildet sind.

## Claims

1. An adaptive lens (1) for laser materials processing, in particular in the high-power range of at least approximately 1 kW, comprising:
two deformable lens surfaces (4a, 4b) spaced apart from each other in the direction of the optical axis (3),
a chamber (5) which is formed between the two lens surfaces (4a, 4b) and is filled with a fluid (6), and
a device (7) comprising at least two piezoelectric ring actuators (11a, 11b) for elastically deforming the two lens surfaces (4a, 4b) either in an axially inward direction in each case or in an axially outward direction in each case, wherein one piezoelectric ring actuator (11b) is arranged on an outer surface of one of the two lens surfaces (4a, 4b) that faces away from the chamber (5),
**characterized in that**
the lens surfaces are formed by two glass plates (4a, 4b), and that the other piezoelectric ring actuator (11a) is arranged on an inner surface of one of the two glass plates (4a, 4b) that faces the chamber (5).

2. An adaptive lens according to claim 1, **characterised in that** the chamber (5) with the fluid (6) is connected to a pressure-compensation element (14).

3. An adaptive lens according to claim 2, **characterised in that** the pressure-compensation element (14) is designed to compensate low-frequency changes in pressure.

4. An adaptive lens according to any one of the preceding claims, **characterised in that** the glass plates (4a, 4b) are each formed by planar or curved glass plates.

## Revendications

1. Lentille adaptative (1) pour l'usinage de matériaux par laser, en particulier dans la plage des puissances élevées d'au moins environ 1 kW, comprenant :
deux surfaces de lentille déformables (4a, 4b) espacées l'une de l'autre dans la direction de l'axe optique (3),
une chambre (5) formée entre les deux surfaces de lentille (4a, 4b) et remplie d'un fluide (6), et
un dispositif (7) avec au moins deux actionneurs annulaires piézoélectriques (11a, 11b) pour déformer élastiquement les deux surfaces de lentille (4a, 4b) soit axialement vers l'intérieur, soit axialement vers l'extérieur, un actionneur annulaire piézoélectrique (11b) étant disposé sur un côté extérieur d'une des deux surfaces de lentille (4a, 4b) opposé à la chambre (5),
**caractérisé en ce**
**que** les surfaces de lentille sont formées par deux plaques de verre (4a, 4b) et que l'autre actionneur annulaire piézoélectrique (11a) est disposé sur un côté intérieur d'une des deux plaques de verre (4a, 4b) tourné vers la chambre (5).

2. Lentille adaptative selon la revendication 1, **caractérisée en ce que** la chambre (5) avec le fluide (6) est reliée à un élément de compensation de pression (14).

3. Lentille adaptative selon la revendication 2, **caractérisée en ce que** l'élément de compensation de pression (14) est conçu pour la compensation de pression de variations de pression à basse fréquence.

4. Lentille adaptative selon l'une des revendications précédentes, **caractérisée en ce que** les plaques de verre (4a, 4b) sont formées chaque fois par des plaques de verre planes ou courbes.
